# FASCICULE DE BREVET EUROPEEN

(11) **EP 1 885 794 B1**
(45) Date de publication et mention de la délivrance du brevet: **26.08.2009**
(21) Numéro de dépôt: 06764677.8
(22) Date de dépôt: 23.05.2006
(51) Int. Cl.: C08L 23/08, C09J 123/08, B32B 27/06

(54) **LIANT DE COEXTRUSION DE PE ET PP COGREFFES DILUES DANS UN PE NON GREFFE**
COEXTRUSIONSBINDEMITTEL AUS IN UNGEPFROPFTEM PE VERDÜNNTEM COGEPFROPFTEM PE UND PP
COEXTRUSION BINDER OF CO-GRAFTED PE AND PP DILUTED IN A NON-GRAFTED PE

(30) Priorité: 26.05.2005 FR 0505306
(43) Date de publication de la demande: 13.02.2008
(73) Titulaire: ARKEMA FRANCE, 92700 Colombes (FR)
(72) Inventeur: CHAUVEAU, Jérôme, F-27000 Evreux (FR); CHOPINEZ, Fabrice, F-27000 Evreux (FR); GERBAULET, Arnaud, F-27000 Evreux (FR); PRADEL, Jean-Laurent, F-27300 Bernay (FR)
(86) Numéro de dépôt international: PCT/FR2006/001185
(87) Numéro de publication internationale: WO 2006/125913

(56) Documents cités:
- EP-A- 0 742 236
- EP-A- 1 043 375
- WO-A-99/61246
- US-A- 4 906 690

## Description

La présente invention concerne un liant de coextrusion à base d'un mélange de polyoléfines cogreffées.

Elle concerne plus précisément un mélange, utile comme liant de coextrusion, d'au moins un polyéthylène haute densité -abrégé PEHD- (A1) et d'au moins un homo
ou copolymère du propylène (B), le mélange de (A1) et (B) étant greffé par un monomère fonctionnel et éventuellement dilué dans un polyéthylène haute densité - abrégé PEHD- (A2) non greffé. Le pourcentage de monomère greffé dans le liant est > 0,05% et <0,5%, plus avantageusement > 0,10 et <0,4% (%en poids total du liant) que (A2) soit présent ou absent dans le liant.

Des revêtements tricouches sont couramment utilisés pour protéger la surface extérieure des tuyaux métalliques destinés à la construction d'oléoduc ou de gazoducs. Ils sont composés de la manière suivante en partant de la surface métallique :
- primaire : résine époxy
- liant réactif avec les époxy
- polyéthylène avantageusement moyenne ou haute densité.

Le liant décrit dans le document WO99/61246, comprend :
(A) 50 à 100 parties d'un polyéthylène homo ou copolymère de densité supérieure ou égale à 0,9;
(B) 0 à 50 parties d'un polymère choisi parmi (B1) le polypropylène homo ou copolymère ;
   la quantité de (A) + (B) étant de 100 parties, le mélange de (A) et (B) étant greffé par au moins 0.5% en poids de monomère fonctionnel. Ce mélange est lui-même dilué dans au moins un polyéthylène homo ou copolymère (C).

Le problème technique est de créer un nouveau liant présentant une forte résistance au pelage à des températures au-delà de 80°C, ceci pour une utilisation préférentielle dans le revêtement de tuyaux (pipe coating) intégrant des structures comprenant au moins une couche de PEHD ou de PEMD. Le liant doit être de plus suffisamment fluide pour faciliter sa mise en oeuvre avec un taux de greffage <0,5% de préférence <0,4% en poids par rapport au poids total du liant.

La demanderesse démontre que pour le type de liant selon l'invention, la densité (entre 0,940 et 0,980 g/cm³) du liant joue un rôle essentiel sur l'adhésion à basse et à haute température. Le liant selon l'invention permet d'atteindre des niveaux d'adhésion suivants : impelable à température ambiante et avec une force de pelage supérieure à 100 N/cm à 80°C dans des conditions mentionnées ci-dessous.

Parmi les structures de l'invention, celles concernant les surfaces métalliques sont particulièrement utiles. La présente invention est utile pour les surfaces métalliques revêtues de polyéthylène et plus particulièrement des tubes dont la surface extérieure est revêtue de PEMD ou de PEHD.

La présente invention concerne aussi une structure multicouche composée d'une couche comprenant le liant précédent, et directement attachée à celle-ci une couche de résine polaire azotée ou oxygénée telle qu'une couche (E) d'une résine polyamide, d'un copolymère saponifié d'éthylène et d'acétate de vinyle, d'une résine polyester, d'un oxyde minéral déposé sur un polymère tel que le PE, le polyéthylène téréphtalate, l'EVOH ou bien une couche métallique.

L'invention a pour objet, un liant de coextrusion comprenant un mélange d'au moins un homo ou copolymère de l'éthylène (A1) de densité comprise entre 0,940 et 0,980 g/cm³ avec au moins un homo ou copolymère du propylène (B) qui comprend au moins 51% en poids de propylène, ledit mélange étant greffé par un monomère fonctionnel et éventuellement dilué dans au moins un homo ou copolymère de l'éthylène (A2) non greffé de densité comprise entre 0,940 et 0,980 g/cm³ ;
- le taux de greffage dudit liant de coextrusion étant < 0,5% en poids par rapport au poids total dudit liant ;
- la densité dudit liant étant comprise entre 0,940 et 0,980 g/cm³.

Selon un mode de réalisation, le liant est caractérisé en ce que le taux de greffage est >0,05% et <0,5% en poids par rapport au poids total dudit liant.

Selon un mode de réalisation, le liant est caractérisé en ce que le taux de greffage est <0,4% en poids par rapport au poids total dudit liant.

Selon un mode de réalisation, le liant est caractérisé en ce que le taux de greffage est >0,10 et <0,4% en poids par rapport au poids total dudit liant.

Selon un mode de réalisation, le liant est caractérisé en ce que la densité de (A1) est comprise entre 0,940 et 0,980 g/cm³.

Selon un mode de réalisation, le liant est caractérisé en ce que la densité de (A2) est comprise entre 0,940 et 0,980 g/cm^{3.}

Selon un mode de réalisation, le liant est caractérisé en ce que la densité de (A1) et/ou de (A2) est comprise entre 0,945 et 0,960 g/cm³.

Selon un mode de réalisation, le liant est caractérisé en ce que la densité de (B) est comprise entre 0,860 et 0,920 g/cm^{3.}

Selon un mode de réalisation, le liant est caractérisé en ce que (A1) et (A2) sont les mêmes polymères.

Selon un mode de réalisation, le liant est caractérisé en ce qu'il comprend :
- 99,5 à 80% de (A1), avantageusement de 99 à 90% ;
- 0,5 à 20% de (B), avantageusement de 0,5 à 10% ;
- 0% de (A2);
- les pourcentages étant exprimés en poids par rapport au poids total dudit liant.

Selon un mode de réalisation, le liant est caractérisé en ce qu'il comprend :
- 5 à 60% de (A1), avantageusement de 5 à 40% ;
- 0,5 à 20% de (B), avantageusement de 0,5 à 10% ;
- 94,5 à 40% de (A2), avantageusement de 94,5 à 60% ;
- les pourcentages étant exprimés en poids par rapport au poids total dudit liant.

L'invention concerne aussi une structure multicouche comprenant au moins une couche de liant de coextrusion défini ci-dessus.

Selon un mode de réalisation, la structure est caractérisée en ce qu'elle comprend les couches successives suivantes : métal/résine époxy/liant de coextrusion/PEHD ou PEMD.

L'invention a également pour objet l'utilisation du liant précédemment décrit.

L'invention concerne de plus l'utilisation d'un liant de coextrusion comprenant au moins un mélange de polyéthylène haute densité -PEHD- (A1) avec au moins un homo ou copolymère du propylène (B), ledit mélange étant greffé par un monomère fonctionnel et éventuellement dilué dans du polyéthylène haute densité -PEHD-(A2) non greffé:
- le taux de greffage dudit liant de coextrusion étant >0,05 et <0,5%, préférentiellement entre 0,15 et 0.4%, le pourcentages étant exprimés en pourcentage en poids par rapport au poids total dudit liant;
- la densité dudit liant étant comprise entre 0,940 et 0,980, préférentiellement entre 0,940 et 0,960 g/cm³;
   dans des structures multicouches comprenant les couches successives suivantes : métal / résine époxy / ledit liant de coextrusion / PEHD ou PEMD.

Selon un mode de réalisation, l'utilisation est caractérisée en ce que (B) est de l'EPR.

S'agissant du polyéthylène (A1), il est choisi parmi les polyéthylènes homo- ou copolymères. La densité de (A1) est comprise entre 0,940 et 0,980 g/cm³, avantageusement entre 0,945 et 0,960 g/cm³. (A1) est un polyéthylène haute densité - PEHD-. Son MFI (indice de viscosité à 190°C, 2,16 kg) est compris entre 1 et 100g/10 min, avantageusement entre 1 et 40 g/10 min.

A titre de comonomères, on peut citer :
- les alpha-oléfines, avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbomène-2-méthyl-2-glycidyl carboxylate et l'endocis-bicyclo(2,2,1)-5-heptène-2,3-diglycidyl dicarboxylate.
- les acides carboxyliques insaturés, leurs sels, leurs anhydrides.

Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.

### (A1) peut comprendre plusieurs comonomères.

Avantageusement le polymère (A1), qui peut être un mélange de plusieurs polymères, comprend au moins 51% et de préférence 75% en moles d'éthylène.

S'agissant de (A2), il est choisi parmi (A1) tel que défini ci-dessus. De préférence, (A2) est identique à (A1). (A2) n'est pas greffé contrairement à (A1). Le MFI (indice de fluidité à l'état fondu à 190°C sous 2,16kg) de A2 est <10 g/10min, de préférence < 6g/10min, encore plus préférentiellement compris successivement entre 6 et 1g/10min, entre 6 et 2g/10min, entre 6 et 3g/10 min voire entre 6 et 4g/10min.

S'agissant de (B), c'est un polypropylène homo- ou copolymère. A titre de comonomères, on peut citer :
- les alpha oléfines, avantageusement celles ayant de 2 à 30 atomes de carbone. Des exemples de telles alphaoléfines sont les mêmes que pour (A1) sauf à remplacer le propylène par l'éthylène dans la liste.
- les diènes
   (B) peut être aussi un copolymère à blocs polypropylène.

A titre d'exemple de polymère (B), on peut citer :
- le polypropylène ;
- les mélanges de polypropylène et d'EPDM ou d'EPR. On ne sortirait pas du cadre de l'invention si (B) est un EPR ou un EPDM.

Le polymère (B), qui peut être un mélange de plusieurs polymères, comprend au moins 51 % et de préférence 75% en poids de propylène.

La densité de (B) peut être comprise entre 0,86 et 0,98 g/cm³, avantageusement entre 0,860 et 0,920 g/cm³. Son MFI est compris avantageusement entre 1 et 30 g/10 min.

### Lorsque (A2) est absent dans le liant, (A2)=0% :

La proportion de (A1) dans le liant est comprise entre 99,5 et 80% en poids par rapport au poids total du liant, avantageusement entre 99 et 90%.

La proportion de (B) dans le liant est comprise entre 0,5 et 20% en poids par rapport au poids total du liant, avantageusement entre 0,5 et 10%.

### Lorsque (A2) est présent dans le liant, (A2)≠0% :

La proportion de (A1) dans le liant est comprise entre 5 et 60% en poids par rapport au poids total du liant, avantageusement entre 5 et 40%.

La proportion de (B) dans le liant est comprise entre 0,5 et 20% en poids par rapport au poids total du liant, avantageusement entre 0,5 et 10%.

La proportion de (A2) dans le liant est comprise entre 94,5 et 40% en poids par rapport au poids total du liant, avantageusement entre 94,5 et 60%.

Le total des pourcentages faisant 100%.

Le mélange de (A1) et (B) est greffé par un monomère fonctionnel. A titre d'exemples de monomère de greffage, on peut citer les acides carboxyliques et leurs dérivés, les chlorures d'acides, les isocyanates, les oxazolines, les époxydes, les amines ou les hydroxydes.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. L'anhydride maléique (MAH) est particulièrement préféré.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1) hept-5-ène-2,3-dicarboxylique, x-méthylbicyclo(2,2,1-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1) hept-5-ène-2,3-dicarboxylique, et x-méthylbicyclo(2,2,1) hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide et des sels métalliques d'acides carboxyliques insaturés tels que acrylate de sodium, méthacrylate de sodium, acrylate de potassium, et méthacrylate de potassium.

Divers procédés connus peuvent être utilisés pour greffer un monomère de greffage sur le mélange de (A1) et (B).

Par exemple, ceci peut être réalisé en chauffant les polymères à greffer à température élevée, environ 150° à environ 300°C, en présence ou en l'absence d'un solvant avec ou sans initiateur de radicaux. Des solvants appropriés pouvant être utilisés dans cette réaction sont le benzène, le toluène, le xylène, le chlorobenzène et le cumène. Des initiateurs de radicaux appropriés pouvant être utilisés comprennent le t-butyl-hydroperoxyde, cumène-hydroperoxyde, di-iso-propyl-benzène-hydroperoxyde, dit-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde et méthyl-éthyl-cétone-peroxyde.

Dans le mélange modifié par greffage et obtenu de la façon susmentionnée, la quantité du monomère de greffage est choisie d'une façon appropriée pour obtenir, au terme du greffage ou, le cas échéant, après dilution, un taux de greffage <0,5% en poids de greffon par rapport au poids total du liant, de préférence > 0,05% et <0,5%, plus avantageusement <0,4, encore plus avantageusement > 0,10 et <0,4%.

La quantité du monomère greffé est déterminée par dosage des fonctions succiniques par spectroscopie IRTF.

Le liant de l'invention peut comprendre en plus divers additifs tels que des antioxydants, des absorbeurs d'ultra-violets, des agents antistatiques, des pigments, des colorants, des agents de nucléation, des charges, des agents de glissement, des lubrifiants, des produits ignifuges et des agents anti-blocage.

Les exemples d'anti-oxydants sont le 2,6-di-t-butyl-p-crésol, O-t-butyl-p-crésol, tétrakis-[méthylène-3-(3,5-di-t-butyl-4-hydroxyphényl)propionate]méthane, la p-naphtylamine, et la para-phénylènediamine.

Les exemples d'absorbeurs d'ultra-violets sont la 2,4-dihydroxybenzophénone, le 2-(2'-hydroxy-3',5'-di-t-butylphényl)-5-chlorobenzotriazole, 2-(2-hydroxy-3-t-butyl-5-méthylphényl)-5-chlorobenzotriazole, et le bis(2,2',6,6')-tétraméthyl-4-pipéridine)sébacate.

Les exemples d'agents anti-statiques sont la lauryldiéthanolamine, palmityl-diéthanolamine, stéaryl-di-éthanolamine, oléyl-diéthanolamine, béhényl-diéthanolamine, polyoxyéthylène-alkylamines, le stéaryl-monoglycéride, et la 2-hydroxy-4-n-octoxybenzophénone.

Les exemples de colorants comprenant des pigments et des colorants sont le noir de carbone, blanc de titane, jaune de cadmium et bleu de phtalocyanine de cuivre.

Les exemples d'agents de nucléation sont le p-tert-butylbenzoate d'aluminium, dibenzylidène-sorbitol et hydroxy-di-p-t-butylbenzoate d'aluminium.

Les exemples de charge sont les fibres de verres, fibres de carbone, talc, argile, silice, carbonate de calcium, sulfate de baryum, hydroxyde de magnésium, hydroxyde de calcium et oxyde de calcium.

Les exemples d'agents de glissement sont le stéaramide, oléamide et érucinamide.

Les exemples de lubrifiants sont le stéarate de calcium, stéarate de zinc, stéarate d'aluminium, stéarate de magnésium, et cire de polyéthylène.

Les exemples de produits ignifuges sont l'oxyde d'antimoine, le décabromobiphényl-éther, et la bis(3,5-dibromo-4-bromopropyloxyphényl)sulfone.

Les exemples d'agents anti-blocage sont le dioxyde de silicium et le polystyrène.

Les quantités de ces autres additifs peuvent être choisies parmi les quantités appropriées qui n'affectent pas d'une façon défavorable les liants de l'invention. Par exemple, rapportées au poids total de (A1)+(B), les quantités appropriées sont d'environ 0,01 à 5% en poids pour les antioxydants; environ 0,01 à 5% en poids pour les absorbeurs d'ultra-violets; environ 0,01 à 1% en poids pour les agents antistatiques; environ 0,01 à 5% en poids pour les agents colorants; environ 0,01 à 5% en poids pour les agents de nucléation; environ 0,1 à 60% en poids pour les charges; environ 0,01 à 1% en poids pour les agents de glissement; environ 0,01 à 1% en poids pour les lubrifiants; environ 0,1 à 50% en poids pour les produits ignifuges et environ 0,01 à 30% en poids pour les agents anti-blocage.

La structure multicouche de la présente invention est constituée par la couche comprenant le liant précédent et par une couche de résine polaire oxygénée ou azotée, ou d'un oxyde minéral déposé sur un polymère tel que le PE, le PET, l'EVOH ou une couche métallique.

Des exemples de résines polaires préférées dans la couche autre que le liant sont les résines de polyamide, un copolymère saponifié d'éthylène et d'acétate de vinyle, les polyesters et les résines époxy.

Plus spécifiquement, elles comprennent des polyamides synthétiques à longue chaîne ayant des motifs structurels du groupe amide dans la chaîne principale, tels que le PA-6, PA-6,6, PA-6,10, PA-11 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60% en moles ; des polyesters tels que le polyéthylène-téréphtalate, le polybutylène-téréphtalate, le polyéthylène naphténate, [ résines époxy....] et des mélanges de ces résines. Les résines époxy sont utilisées sous forme de poudre ou de liquide.

La couche d'oxyde minéral peut être par exemple de la silice, elle est déposée sur une couche de PE, PET ou EVOH. La structure de l'invention comprend donc respectivement : une couche de liant, une couche de SᵢO₂ (ou SᵢOₓ) et soit une couche de PE, de PET, d'EVOH ou une couche métallique.

La couche métallique peut être par exemple une feuille, une pellicule ou une feuille d'un métal tel que l'aluminium, le fer, le cuivre, l'étain et le nickel ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention.

On ne sortirait pas du cadre de l'invention si la structure précédente était associée à d'autres couches. Une structure avantageuse est celle comprenant les couches suivantes : métal/époxy/liant/PEHD ou PEMD.

L'invention concerne aussi la précédente structure associée du côté du liant à une couche (F) à base de polyoléfine. La polyoléfine (F) est un polyéthylène haute ou moyenne densité (PEHD ou PEMD), de préférence c'est un polyéthylène haute densité.

Ces structures sont également utiles pour faire des emballages, par exemple des corps creux rigides tels que des flacons ou des bouteilles ou des poches souples ou des films multicouches. On peut citer les matériaux comprenant un film de polyamide (PA) et un film de polyéthylène (PE), le film de polyéthylène pouvant être laminé sur le film de polyamide ou coextrudé avec le polyamide. Le liant de coextrusion est déposé entre le polyéthylène et le polyamide pour une bonne adhésion du PA et du PE. Ces matériaux multicouches peuvent être des structures à trois couches PE/liant/EVOH dans lesquelles EVOH désigne un copolymère de l'éthylène et de l'alcool vinylique ou un copolymère éthylène acétate de vinyle (EVA) saponifié en partie ou en totalité ou des structures à cinq couches PE/liant/EVOH/liant/PE.

Les liants de l'invention sont utiles pour les structures suivantes.
PE/liant/EVOH/liant/PE (PE désigne le polyéthylène)
PE/liant/EVOH
PE/liant/PA
PP/liant/PA
PP/liant/EVOH/liant/PP (PP désigne le polypropylène)

Ces structures et ces emballages peuvent être fabriqués par coextrusion, lamination, extrusion-soufflage ou par poudrage de quelque type que ce soit (électrostatique, dépôt de poudres) sur support chaud ou subissant une étape de chauffe.

Nous allons maintenant exemplifier l'invention.
Des liants (Exemple 1-3 et des Comparatifs 1-3) ont été réalisés tel que défini dans le **tableau 1** ci-dessous.

**TABLEAU 1**

| | **A1** | | | **B** | | **A2** | | | **Taux global de MAH greffé** |
|---|---|---|---|---|---|---|---|---|---|
| | **densité** | **MFI (190°C sous 2,16kg)** | **Taux global (massique)** | **MFI (230°C sous 2,16kg)** | **Taux global (massique)** | **densité** | **MFI (190°C sous 2,16kg)** | **Taux global (massique)** | |
| Ex1 | 0,954 | 20 | 22,5% | 8 | 7,5% | 0,953 | 4,5 | 70% | 0,20% |
| Ex2 | 0,954 | 20 | 12% | 7 | 3% | 0,953 | 4,5 | 85% | 0,34% |
| Ex3 | 0,954 | 4,3 | 98% | 7 | 2% | / | / | / | 0,36% |
| Cp1 | 0,954 | 20 | 12,75% | 8 | 2,25% | 0,92 | 3,6 | 85% | 0,28% |
| Cp2 | 0,91 | 6 | 12,75% | 8 | 2,25% | 0,953 | 4,5 | 85% | 0,25% |
| Cp3. | 0,917 | 3,3 | 12.75% | 8 | 2,25% | 0,92 | 3,6 | 85% | 0,24% |

Pour les Ex 1, Cp1, Cp2 et Cp3, (B) est un homopolymère.

Pour Ex2 et Ex3, (B) est un PP copolymère choc.

Des tubes d'acier ont été revêtus dans des conditions suivantes pour former des structures du type métal/époxy/liant/PEHD :
- Grenaillage du type :
   - Etat de surface Sa 21/2;
   - Rugosité Rz 70-80 µm;
- Chauffage du tube par induction : 180 à 220°C;
- Application du primaire époxy (EUROKOTE 714-41) par poudrage électrostatique;
- Extrusion du liant avec un temps époxy/liant de 24 secondes;
- temps liant/top coat : 30s;
- temps top coat/refroidissement : 30s ;
- Refroidissement par une douche d'eau avec un temps époxy/refroidissement de 3min pour s'assurer de la réticulation complète de l'époxy;
- Extrusion du PEHD après le liant.

EUROKOTE 714-41 désigne une résine époxy ayant une tg = 105°C et fournie par la Société BITUMES SPECIAUX et a les caractéristiques suivantes:
- Masse volumique à 23°C (NFT 30-043): 1,5 ± 0,05 g/ml
- Teneur en humidité (IBS 319): < 0,50 %
- Granulométrie (IBS 316) diamètre médian 38 ± 4 pm refus à 96 µm < 10 %
- Tg (NFA 49-706): 105± 5°C
- Temps de gel 25 ± 10 s à 180°C et de 9 ± 3s à 220°C.

Les épaisseurs des couches sont successivement:
- Couche d'époxy =110 µm;
- Couche de liant =250 µm;
- Couche externe(PEHD) =2,5 mm.

Des mesures de force de pelage ont été réalisées selon la DIN 30670 et ont donné les résultats regroupés dans le tableau 2 ci-dessous.

**TABLEAU 2**

| | **Force de pelage à 23°C (N/cm)** | **Force de pelage à 80°C (N/cm)** |
|---|---|---|
| **Ex1** | Impelable | 164 |
| **Ex2** | lmpelable | 161 |
| **Ex3** | Impelable | 182 |
| **Cp1** | 223 | 73 |
| **Cp2** | 87 | 14 |
| **Cp3** | 242 | 41 |

## Revendications

1. Liant de coextrusion comprenant un mélange d'au moins un homo ou copolymère de l'éthyléne (A1) de densité comprise entre 0.940 et 0.980g/cm³ avec ou moins un homo ou copolymère du propylène (B) qui comprend au moins 51% en poids de propylène ledit mélange étant greffé par un monomère fonctionnel et éventuellement dilué dans au moins un homo ou copolymère de l'éthylène (A2) non greffé de densité comprise entre 0,940 et 0.980 g/cm³ ;
• le taux de greffage dudit liant de coextrusion étant < 0.5% en poids par rapport au poids total dudit liant ;
• la densité dudit liant étant comprise entre 0,940 et 0,980 g/cm³.

2. Liant selon la revendication 1, **caractérisé en ce que** le taux de greffage est >0,05% et <0,5% en poids par rapport au poids total dudit liant.

3. Liant selon l'une des revendications précédentes, **caractérisé en ce que** le taux de greffage est <0,4% en poids par rapport au poids total dudit liant.

4. Liant selon l'une des revendications précédentes, **caractérisé en ce que** le taux de greffage est >0,10 et <0,4% en poids par rapport au poids total dudit liant.

5. Liant selon l'une des revendications précédentes, **caractérisé en ce que** la densité de (A 1) et/ou de (A2) est comprise entre 0.945 et 0.960 g/cm^{3.}

6. Liant selon l'une des revendications précédentes, **caractérisé en ce que** la densité de (B) est comprise entre 0.860 et 0,920 g/cm³.

7. Liant selon l'une des revendications précédentes, **caracterisé en ce que** (A1) et (A2) sont les mêmes polymères.

8. Liant Selon l'une des revendications 1 à 7, **caractérisé en ce qu'**il comprend :
• 99.5 à 80% de (A1), avantageusement de 99 à 90%;
• 0.5 à 20% de (B), avantageusement de 0,5 à 10% ;
• 0% de (A2);
• les pourcentages étant exprimés en poids par rapport au poids total dudit liant.

9. Liant selon l'une des revendications 1 à 7, **caractérisé en ce qu'**il comprend :
• 5 à 60% de (A1), avantageusement de 5 à 40% ;
• 0,5 à 20% de (B), avantageusement de 0,5 à 10%;
• 94,5 à 40% de (A2), avantageusement de 94.5 à 60%;
• les pourcentages étant exprimés en poids par rapport ou poids total dudit liant.

10. Structure multicouche comprenant au moins une couche de liant de coextrusion selon l'une des revendications 1 à 9.

11. Structure selon la revendication précédente, **caractérisée en ce qu'**elle comprend les couches successives suivantes : métal/résine époxy/liant de coextrusion/PEHD ou PEMD.

12. Utilisation du liant selon l'une des revendications 1 à 9

13. Utilisation d'un liant de coextrusion comprenant au moins un mélange de polyéthylène haute densité -PEHD- (A1) avec au moins un homo ou copolymère du propylène (B) qui comprend au moins 51% en poids de propyléne ledit mélange étant greffé par un monomère fonctionnel et éventuellement dilué dans du polyéthylène haute densité -PEHD- (A2) non greffé:
• le taux de greffage dudit liant de coextrusion étant >0,05 et <0,5%, préférentiellement entre 0,15 et 0,4%, le pourcentages étant exprimés en pourcentage en poids par rapport au poids total dudit liant;
• la densité dudit liant étant comprise entre 0.940 et 0.980, préférentiellement entre 0,940 et 0.960 g/cm³;
dans des structures multicouches comprenant les couches successives suivantes : métal / résine époxy / ledit liant de coextrusion / PEHD ou PEMD.

14. Utilisation selon la revendication précédente, **caractérisée en ce que** (B) est de l'EPR.

## Claims

1. A coextrusion tie comprising a blend of at least an ethylene homopolymer or copolymer (A1) of density between 0.940 and 0.980 g/cm³ with at least one propylene homopolymer or copolymer (B) comprising at least 51 wt% propylene, said blend being grafted by a functional monomer and optionally diluted in an ungrafted ethylene homopolymer or copolymer (A2) of density between 0.940 and 0.980 g/cm³;
• the level of grafting of said coextrusion tie being < 0.5% by weight relative to the total weight of said tie; and
• the density of said tie being between 0.940 and 0.980 g/cm³.

2. The tie as claimed in claim 1, **characterized in that** the level of grafting is > 0.05% and < 0.5% by weight relative to the total weight of said tie.

3. The tie as claimed in either of the preceding claims, **characterized in that** the level of grafting is < 0.4% by weight relative to the total weight of said tie.

4. The tie as claimed in one of the preceding claims, **characterized in that** the level of grafting is > 0.10% and < 0.4% by weight relative to the total weight of said tie.

5. The tie as claimed in one of the preceding claims, **characterized in that** the density of (A1) and/or of (A2) is between 0.945 and 0.960 g/cm³.

6. The tie as claimed in one of the preceding claims, **characterized in that** the density of (B) is between 0.860 and 0.920 g/cm³.

7. The tie as claimed in one of the preceding claims, **characterized in that** (A1) and (A2) are the same polymers.

8. The tie as claimed in one of claims 1 to 7, **characterized in that** it comprises:
• 99.5 to 80%, advantageously 99 to 90%, of (A1);
• 0.5 to 20%, advantageously 0.5 to 10%, of (B);
• 0% of (A2),
• the percentages being expressed by weight relative to the total weight of said tie.

9. The tie as claimed in one of claims 1 to 7, **characterized in that** it comprises:
• 5 to 60%, advantageously 5 to 40%, of (A1);
• 0.5 to 20%, advantageously 0.5 to 10%, of (B);
• 94.5 to 40%, advantageously 94.5 to 60%, of (A2),
• the percentages being expressed by weight relative to the total weight of said tie.

10. A multilayer structure that includes at least one coextrusion tie layer as claimed in one of claims 1 to 9.

11. The structure as claimed in the preceding claim, **characterized in that** it comprises the following successive layers: metal/epoxy resin/coextrusion tie/HDPE or MDPE.

12. The use of the tie as claimed in one of claims 1 to 9.

13. The use of a coextrusion tie comprising at least one blend of high-density polyethylene (HDPE) (A1) with at least one propylene homopolymer or copolymer (B) comprising at least 51 wt% propylene, said blend being grafted by a functional monomer and optionally diluted in ungrafted high-density polyethylene (HDPE) (A2):
• the level of grafting of said coextrusion tie being > 0.05 and < 0.5%, preferably between 0.15% and 0.4%, the percentages being expressed as percentages by weight relative to the total weight of said tie; and
• the density of said tie being between 0.940 and 0.980 g/cm³, preferably between 0.940 and 0.960 g/cm³,
in multilayer structures comprising the following successive layers: metal/epoxy resin/said coextrusion tie/HDPE or MDPE.

14. The use as claimed in the preceding claim, **characterized in that** (B) is EPR.

## Patentansprüche

1. Coextrusionsbindemittel, umfassend eine Mischung aus mindestens einem Homo- oder Copolymer von Ethylen (A1) mit einer Dichte zwischen 0,940 und 0,980 g/cm³ und mindestens einem Homo- oder Copolymer von Propylen (B), das mindestens 51 Gew.-% Propylen enthält, wobei die Mischung mit einem funktionellen Monomer gepfropft und gegebenenfalls in mindestens einem ungepfropften Homo- oder Copolymer von Ethylen (A2) mit einer Dichte zwischen 0,940 und 0,980 g/cm³ verdünnt ist;
• wobei der Pfropfgehalt des Coextrusionsbindemittels < 0,5 Gew.-%, bezogen auf das Gesamtgewicht des Bindemittels, ist;
• wobei die Dichte des Bindemittels zwischen 0,940 und 0,980 g/cm³ liegt.

2. Bindemittel nach Anspruch 1, **dadurch gekennzeichnet, daß** der Pfropfgehalt > 0,05 Gew.-% und < 0,5 Gew.-%, bezogen auf das Gesamtgewicht des Bindemittels, ist.

3. Bindemittel nach einem der vorhergehenden Ansprüche, **dadurch gekennzeichnet, daß** der Pfropfgehalt < 0,4 Gew.-%, bezogen auf das Gesamtgewicht des Bindemittels, ist.

4. Bindemittel nach einem der vorhergehenden Ansprüche, **dadurch gekennzeichnet, daß** der Pfropfgehalt > 0,10 und < 0,4 Gew.-%, bezogen auf das Gesamtgewicht des Bindemittels, ist.

5. Bindemittel nach einem der vorhergehenden Ansprüche, **dadurch gekennzeichnet, daß** die Dichte von (A1) und/oder (A2) zwischen 0,945 und 0,960 g/cm³ liegt.

6. Bindemittel nach einem der vorhergehenden Ansprüche, **dadurch gekennzeichnet, daß** die Dichte von (B) zwischen 0,860 und 0,920 g/cm³ liegt.

7. Bindemittel nach einem der vorhergehenden Ansprüche, **dadurch gekennzeichnet, daß** es sich bei (A1) und (A2) um die gleichen Polymere handelt.

8. Bindemittel nach einem der Ansprüche 1 bis 7, **dadurch gekennzeichnet, daß** es:
• 99,5 bis 80% (A1), vorteilhafterweise 99 bis 90%;
• 0,5 bis 20% (B), vorteilhafterweise 0,5 bis 10%;
• 0% (A2)
umfaßt; wobei die Prozentanteile in Gewichtsprozent, bezogen auf das Gesamtgewicht des Bindemittels, ausgedrückt sind.

9. Bindemittel nach einem der Ansprüche 1 bis 7, **dadurch gekennzeichnet, daß** es:
• 5 bis 60% (A1), vorteilhafterweise 5 bis 40%;
• 0,5 bis 20% (B), vorteilhafterweise 0,5 bis 10%;
• 94,5 bis 40% (A2), vorteilhafterweise 94,5 bis 60%;
umfaßt; wobei die Prozentanteile in Gewichtsprozent, bezogen auf das Gesamtgewicht des Bindemittels, ausgedrückt sind.

10. Mehrschichtstruktur mit mindestens einer Schicht des Coextrusionsbindemittels gemäß einem der Ansprüche 1 bis 9.

11. Struktur nach dem vorhergehenden Anspruch, **dadurch gekennzeichnet, daß** sie die folgenden aufeinanderfolgenden Schichten umfaßt: Metall/Epoxidharz/Coextrusionsbindemittel/HDPE oder MDPE.

12. Verwendung des Bindemittels gemäß einem der Ansprüche 1 bis 9.

13. Verwendung eines Coextrusionsbindemittels, umfassend mindestens eine Mischung aus Polyethylen hoher Dichte - HDPE - (A1) und mindestens einem Homo- oder Copolymer von Propylen (B), das mindestens 51 Gew.-% Propylen enthält, wobei die Mischung mit einem funktionellen Monomer gepfropft und gegebenenfalls in ungepfropftem Polyethylen hoher Dichte - HDPE - (A2) verdünnt ist;
• wobei der Pfropfgehalt des Coextrusionsbindemittels > 0,05 und < 0,5 Gew.-%, vorzugsweise zwischen 0,15 und 0,4 bew.-%, bezogen auf das Gesamtgewicht des Bindemittels, ist;
• wobei die Dichte des Bindemittels zwischen 0,940 und 0,980 g/cm³, vorzugsweise zwischen 0,940 und 0,960 g/cm³, liegt;
in Mehrschichtstrukturen mit den folgenden aufeinanderfolgenden Schichten: Metall/Epoxidharz/Coextrusionsbindemittel/HDPE oder MDPE.

14. Verwendung gemäß dem vorhergehenden Anspruch, **dadurch gekennzeichnet, daß** es sich bei (B) um EPR handelt.
